# EUROPEAN PATENT APPLICATION

(11) **EP 4 794 327 A1**
(43) Date of publication of application: **19.08.2026**
(21) Application number: 25742054.7
(22) Date of filing: 10.01.2025
(51) Int. Cl.: H04N 13/156, H04N 13/106, H04N 13/344, G06N 3/0475, G06T 15/50, G06T 19/00

(54) **METHOD FOR DISPLAYING THREE-DIMENSIONAL IMAGE, STORAGE MEDIUM SUPPORTING SAME, AND ELECTRONIC DEVICE SUPPORTING SAME**

(30) Priority: 15.01.2024 KR 20240006148; 16.02.2024 KR 20240022749
(71) Applicant: Samsung Electronics Co., Ltd., Suwon-si, Gyeonggi-do 16677 (KR)
(72) Inventor: SON, Chaeyeon, Suwon-si Gyeonggi-do 16677 (KR); KIM, Sooryuh, Suwon-si Gyeonggi-do 16677 (KR); SON, Dongil, Suwon-si Gyeonggi-do 16677 (KR); AHN, Sunggeun, Suwon-si Gyeonggi-do 16677 (KR); LIM, Kwangyong, Suwon-si Gyeonggi-do 16677 (KR); CHOI, Bokun, Suwon-si Gyeonggi-do 16677 (KR)
(74) Representative: Gulde & Partner
(86) International application number: PCT/KR2025/000628
(87) International publication number: WO 2025/155038

(57) **Abstract**

An electronic device disclosed herein may include a display, a memory, and at least one processor. The memory may store instructions, when executed by the at least one processor, that, when executed by the at least one processor, cause the electronic device to display a three-dimensional (3D) image in a first mode, confirm a request to switch from the first mode to a second mode, determine whether the switching is possible within a specified time, generate a first intermediate image when the switching is possible within the specified time, generate a second intermediate image when the switching is possible beyond the specified time, and output the first intermediate image or the second intermediate image in a process of switching from the first mode to the second mode.

## Description

### TECHNICAL FIELD

Various embodiments disclosed herein relate to a method of displaying a three-dimensional image and an electronic device supporting the same.

### BACKGROUND ART

Electronic devices that are worn on a user's body and provide three-dimensional images, such as augmented reality (AR) glasses and head mounted display (HMD) devices, are becoming more and more widely used. Electronic devices may recognize a user's surroundings and provide the user with augmented reality, virtual reality, or mixed reality that reflects the surroundings.

Augmented reality (AR) is a technology that superimposes virtual information onto real-world images displayed on a display of an electronic device. Virtual reality (VR) is a technology that displays virtual information and/or pre-recorded preview images on a display of an electronic device. Mixed reality (MR) is a technology that outputs complex content that combines VR and AR.

The electronic device may display a loading screen or provide simple effects when switching between 3D modes.

The aforementioned information may be provided as the related art to aid in understanding the present disclosure. No claim or determination is made as to whether any of the above matters constitutes prior art related to the present disclosure.

### DISCLOSURE OF THE INVENTION

### TECHNICAL SOLUTION

An electronic device according to an example embodiment includes: a display, a memory, and at least one processor comprising processing circuitry, wherein the memory stores instructions and at least one processor, individually and/or collectively is configured to execute the instructions and to cause the electronic device to: display a three-dimensional (3D) image in a first mode, confirm a request to switch from the first mode to a second mode, determine whether the switching is possible within a specified time, generate a first intermediate image by processing a first image of the first mode and a second image of the second mode according to a first image processing method based on the switching being possible within the specified time, generate a second intermediate image by processing the first image of the first mode and the second image of the second mode according to a second image processing method based on the switching being possible beyond the specified time, and output the first intermediate image or the second intermediate image in a process of switching from the first mode to the second mode.

An electronic device according to an example embodiment includes a display, a memory, and at least one processor, comprising processing circuitry, wherein the memory stores instructions and at least one processor, individually and/or collectively, is configured to execute the instructions and to cause the electronic device to: display a 3D image in a first mode on the display, confirm a request to switch from the first mode to a second mode, generate at least one virtual object related to the second mode, and add and output the at least one virtual object to a first image in the first mode in a process of the switching from the first mode to the second mode.

A method of displaying a three-dimensional image according to an example embodiment is performed in an electronic device. The method includes: displaying a 3D image in a first mode, confirming a request to switch from the first mode to a second mode, determining whether the switching is possible within a specified time, generating a first intermediate image by processing a first image of the first mode and a second image of the second mode according to a first image processing method based on the switching being possible within the specified time, generating a second intermediate image by processing the first image of the first mode and the second image of the second mode according to a second image processing method based on the switching being possible beyond the specified time, and outputting the first intermediate image or the second intermediate image in a process of switching from the first mode to the second mode.

A non-transitory computer-readable storage medium according to an example embodiment stores commands executable by a processor. When executed, the commands cause an electronic device to perform operations including: displaying a 3D image in a first mode, confirming a request to switch from the first mode to a second mode, determining whether the switching is possible within a specified time, generating a first intermediate image by processing a first image of the first mode and a second image of the second mode according to a first image processing method based on the switching being possible within the specified time, generating a second intermediate image by processing the first image of the first mode and the second image of the second mode according to a second image processing method based on the switching being possible beyond the specified time, and outputting the first intermediate image or the second intermediate image in a process of switching from the first mode to the second mode.

### BRIEF DESCRIPTION OF THE DRAWINGS

FIG. 1a is a block diagram illustrating an electronic device in a network environment according to various embodiments.
FIG. 1b is a configuration diagram of an electronic device that outputs a three-dimensional image according to one embodiment.
FIG. 2 illustrates display of an intermediate scene according to one embodiment.
FIG. 3 shows an intermediate screen transfer unit according to one embodiment.
FIG. 4 is a flowchart illustrating a method of displaying a three-dimensional image according to one embodiment.
FIG. 5 illustrates generation of a real object and virtual object based intermediate scene according to one embodiment.
FIG. 6 shows changes in an intermediate scene according to a loading progress of a second mode according to one embodiment.
FIG. 7 is a flowchart showing a method of displaying a three-dimensional image in an animated manner according to one embodiment.
FIG. 8a illustrates generation of an intermediate scene by an alpha blending technique according to one embodiment.
FIG. 8b illustrates generation of an intermediate scene using generative AI according to one embodiment.
FIG. 9 illustrates display of an intermediate scene according to a position of a user according to one embodiment.
FIG. 10 illustrates switching from a first VR mode to a second VR mode according to one embodiment.
FIGS. 11a and 11b illustrate generation of an intermediate scene using a real object according to one embodiment.
FIGS. 12a and 12b illustrate generation of an intermediate scene using virtual objects according to one embodiment.

With respect to the description of the drawings, the same or similar reference signs may be used for the same or similar elements.

### MODE FOR CARRYING OUT THE INVENTION

Hereinafter, various embodiments of the present disclosure will be described with reference to the accompanying drawings. However, this is not intended to limit the present disclosure to the specific embodiments, and it is to be construed to include various modifications, equivalents, and/or alternatives of embodiments of the present disclosure. With regard to the description of the drawings, similar reference numerals may be used to refer to similar elements.

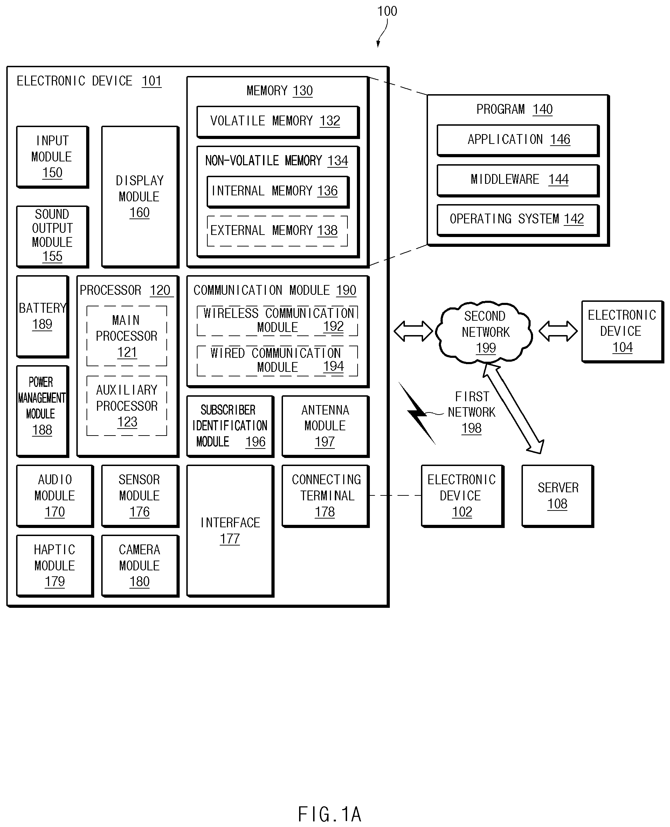

Fig. 1a is a block diagram illustrating an electronic device 101 in a network environment 100 according to various embodiments. Referring to Fig. 1a, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

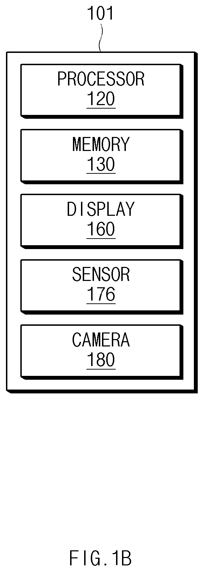

FIG. 1b is a schematic diagram of an electronic device that outputs a three-dimensional image according to one embodiment.

Referring to FIG. 1b, an electronic device 101 may be a device that provides augmented reality (AR), virtual reality (VR), or mixed reality (MR). For example, the electronic device 101 may be smart glasses or a head mounted display (HMD) device that supports video see through (VST).

The electronic device 101 (e.g., the electronic device 101 in FIG. 1a) may include a processor 120 (e.g., the processor 120 in FIG. 1a), a memory 130 (e.g., the memory 130 in FIG. 1a), a display 160 (e.g., the display module 160 in FIG. 1a), a sensor 176 (e.g., the sensor module 176 in FIG. 1a), and/or a camera 180 (e.g., the camera module 180 in FIG. 1a). The configuration of the electronic device 101 in FIG. 1b is exemplary, and the electronic device 101 may further include other components. For example, the electronic device 101 may further include a wireless communication circuit or an object recognition device.

The processor 120 (e.g., the processor 120 in FIG. 1a) may execute, for example, software (e.g., the program 140 in FIG. 1a) to control at least one other component (e.g., a hardware or software component) of the electronic device 101 connected to the processor 120, and may perform various data processing or computation. According to one embodiment, as at least part of the data processing or computation, the processor 120 may store a command or data received from another component in a volatile memory (e.g., the volatile memory 132 in FIG. 1a), process the command or the data stored in the volatile memory 132, and store resulting data in a non-volatile memory (e.g., the non-volatile memory 134 in FIG. 1a).

The processor 120 may process operations for providing augmented reality, virtual reality, or mixed reality. The processor 120 may share the operations for providing augmented reality, virtual reality, or mixed reality with an external device (e.g., the server 108 in FIG. 1a) (e.g., cloud computing). For example, the processor 120 may exchange data for providing augmented reality, virtual reality, or mixed reality with an external device via a wireless communication circuit when the electronic device 101 further includes a wireless communication circuit (e.g., the communication module 190 in FIG. 1a). The external device may process operations related to data and then transmit the processed data to the electronic device 101.

The memory 130 (e.g., the memory 130 in FIG. 1a) may store various data to be used by at least one component (e.g., the processor 120 or the sensor 176) of the electronic device 101. The various data may include, for example, software (e.g., the program 140 in FIG. 1a) and input data or output data for a command related thereto. The memory 130 may include the volatile memory 132 or the non-volatile memory 134. The memory 130 may store data for providing augmented reality, virtual reality, or mixed reality. For example, the memory 100 may store data for an augmented reality element, a virtual reality element, or a mixed reality element mapped to 3D space.

The sensor 176 (e.g., the sensor module 176 in FIG. 1a) may detect an operational state (e.g., power) of the electronic device 101 or an external environmental state (e.g., a state of the user), and then generate an electrical signal or data value corresponding to the detected state. According to one embodiment, the sensor 176 may include, for example, a gesture sensor, an acceleration sensor, a grip sensor, a proximity sensor, a color sensor, and/or a biometric sensor. The electronic device 101 may detect a user's actions using the sensor 176 and provide augmented reality, virtual reality, or mixed reality based on the user's actions.

In one embodiment, the display 160 (e.g., the display 160 in FIG. 1a) may visually provide information to the outside (e.g., the user) of the electronic device 101. For example, when AR is supported, the display 160 may be a see-through display. The electronic device 101 may output the augmented reality element, the virtual reality element, or the mixed reality element to the display 160. The user may view the augmented reality element, the virtual reality element, or the mixed reality element through the display 160.

The electronic device 101 may provide augmented reality, virtual reality, or mixed reality to the user through the display 160. The augmented reality, the virtual reality, or the mixed reality may be understood as the output of an augmented reality element, a virtual reality element, or a mixed reality element corresponding to a screen seen by the user.

According to one embodiment, the electronic device 101 may recognize objects and environments in a three-dimensional space and map a corresponding augmented reality element, virtual reality element, or mixed reality element to the recognized objects or environments. The electronic device 101 may store mapping data in the memory 130. For example, when the electronic device 101 recognizes a TV in an AR space, the electronic device may map an application related to the TV (e.g., a video application) to the TV. The mapping data may be stored in the memory 130. In another embodiment, when the electronic device 101 further includes a wireless communication circuit, the electronic device 101 may receive the mapping data for the AR space from a server (e.g., the server 108 in FIG. 1a) using the wireless communication circuit. For example, when there is a history of the AR space being already provided, the mapping data for the AR space may be stored on the server (e.g., the cloud). The electronic device 101 may receive the mapping data from the server and store the received mapping data in the memory 130.

The electronic device 101 may retrieve data from the memory 130 to output the augmented reality element, the virtual reality element, or the mixed reality element. The electronic device 101 may receive a user input (e.g., gestures) for the augmented reality element, the virtual reality element, or the mixed reality element and provide augmented reality, virtual reality, or mixed reality in response to the user input. For example, the electronic device 101 may output an application (e.g., a video application) on a specific object in the AR space, and may receive a user input (e.g., a touch gesture) to execute (e.g., play) the application (e.g., the video application).

The electronic device 101 may obtain data related to the user's actions (e.g., information related to a user's moving direction, moving speed, the user's gaze direction, and/or head direction) by using the sensor 176 or the camera 180. For example, a user's gesture may be understood as the user moving a body part (e.g., a hand, a foot). The electronic device 101 may recognize the user's action as the user input when the user's action corresponds to a preset gesture. For example, when the user performs a specific action (e.g., a touch gesture) for an augmented reality element, a virtual reality element, or a mixed reality element (e.g., an application), the electronic device 101 may recognize the user's action as the user input. The electronic device 101 may execute the augmented reality element, the virtual reality element, or the mixed reality element (e.g., an application) in response to the user input.

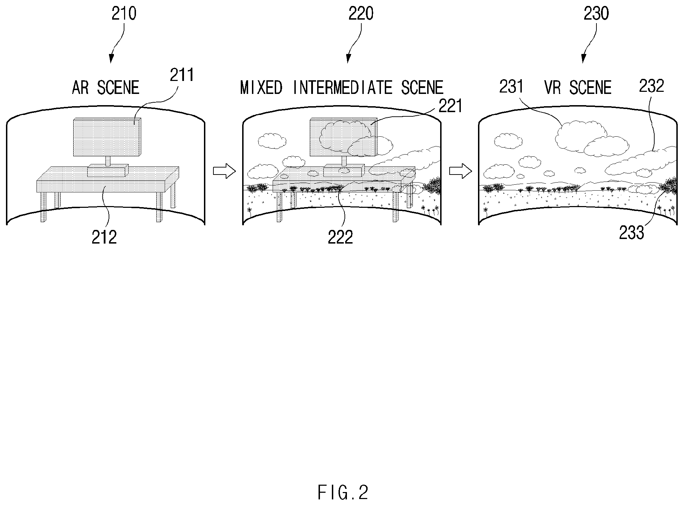

FIG. 2 illustrates display of an intermediate scene according to one embodiment.

Referring to FIG. 2, the processor 120 may display a three-dimensional image of a first mode (hereinafter, a first mode scene). The first mode may be an augmented reality (AR) mode. The processor 120 may capture images in real time through the camera 180 and display the captured images on the display 160 (video see through (VST)).

For example, in a first mode scene 210, the processor 120 may virtually display additional information (e.g., object name and object description) to real objects 211 and 212. The first mode scene 210 may include a first real object 211 or a second real object 212.

When there is a separate user input (e.g., selecting a display object (e.g., an icon) of a VR application) or a specified condition (e.g., user movement, gesture input, entry into a specific area), the processor 120 may display a three-dimensional image of the second mode (hereinafter, a second mode scene). The second mode may be a virtual reality (VR) mode. In the second mode, the processor 120 may display a virtual object or a virtual background, and may not display a real object. The second mode may be one that gives users an immersive feeling as if they are in a separate space from the actual space.

For example, in a second mode scene 230, the processor 120 may display a first virtual object 231, a second virtual object 232, or a third virtual object 233. The second mode scene 230 may not include an object corresponding to a separate real object.

When transferring directly from the first mode scene 210 to the second mode scene 230, the user may feel uncomfortable due to a sudden change in environment, a change in illumination, or a change in spatial sense. Furthermore, when transferring directly from the first mode scene 210 to the second mode scene 230, a simple loading screen may be displayed, causing the user to feel bored.

When switching from the first mode to the second mode, the processor 120 may display an intermediate image (mixed intermediate scene) 220 (hereinafter, an intermediate scene) in which the first mode and the second mode are mixed. The intermediate scene 220 may have a mixed form of the first mode scene 210 and the second mode scene 230.

For example, the intermediate scene 220 may include a first change object 221 and a second deforming object 222. The first change object 221 and the second deforming object 222 may each have the form of a combination of an object property of the first mode and a background property of the second mode. Each of the first change object 221 and the second deforming object 222 may have substantially the same shape as the first real object 211 and the second real object 212 included in the first mode scene 210. The first change object 221 and the second deforming object 222 may have a color or surface that is the same as or matches a background style of the second mode scene 230.

When switching between 3D modes, the processor 120 may provide, through the intermediate scene 220, an experience in which the user gradually enters a virtual space of a second mode (VR) in a state in which the characteristics of the first mode (AR) of reality are retained. Then, when the second mode is fully loaded, the user may immersively enter the space of the second mode.

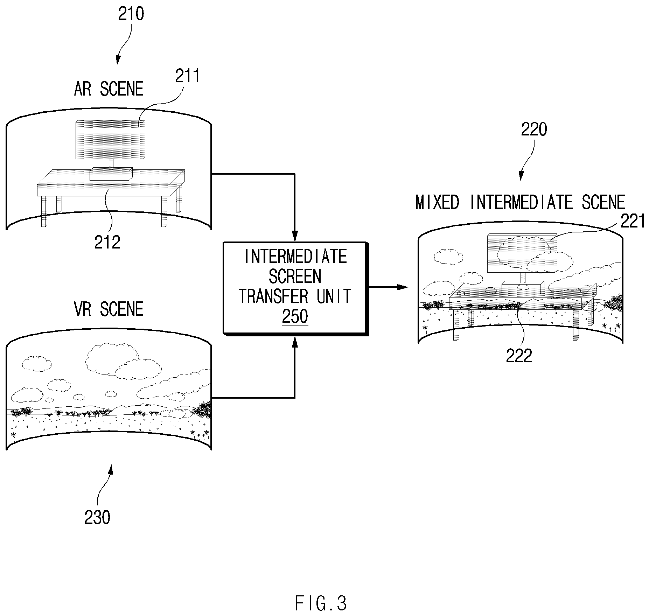

FIG. 3 illustrates an intermediate screen transfer unit according to one embodiment.

Referring to FIG. 3, an intermediate screen transfer unit (or style transfer module) 250 may generate an intermediate scene 220 using first information extracted from a first mode scene 210 and second information regarding a second mode scene 230. The intermediate screen transfer unit 250 may generate the intermediate scene 220 using a generative AI model. The operation of the intermediate screen transfer unit 250 may be part of the operation of the processor 120 in FIG. 1b.

The intermediate screen transfer unit 250 may obtain recognition information about a real object (hereinafter, real object information) from a first mode program (e.g., AR application) that outputs the first mode scene 210. The real object information may include information about a position, a size, or a property of the real object. The real object information may be extracted internally by the electronic device 101 through internal operations or received from an external server.

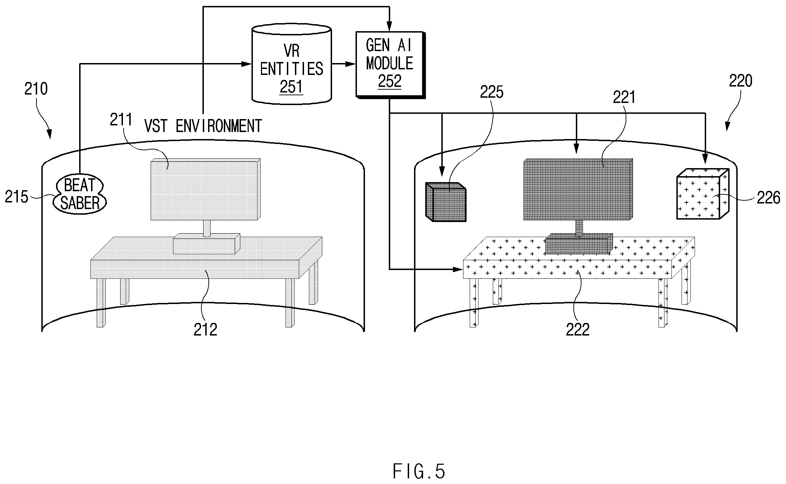

The intermediate screen transfer unit 250 may store information about entities (objects, structures) included in a start frame of the second mode scene 230 in advance. Information (library) about entities in the second mode may be stored in advance by a creator of the second application (VR program). Alternatively, when there is a history of the second application (VR program) being previously executed, the intermediate screen transfer unit 250 may store information about the entities of the second mode in advance after generation through generative AI (e.g., a generative AI 252 in FIG. 5).

When switching from the first mode to the second mode, the intermediate screen transfer unit 250 may display the intermediate scene 220 in the form of a mixture of the first mode and the second mode. The intermediate screen transfer unit 250 may generate the intermediate scene 220 in different ways by distinguishing between a state in which switching is required within a specified time (hereinafter, an emergency state) or a state in which a switching time longer than the specified time is secured (hereinafter, a non-emergency state).

For example, in the non-emergency state, the intermediate screen transfer unit 250 may generate the intermediate scene 220 through the generative AI. The intermediate scene 220 may include a first change object 221 and a second deforming object 222. The first change object 221 and the second deforming object 222 may each have the form of a combination of an object property of the first mode and a background property of the second mode. Each of the first change object 221 and the second deforming object 222 may have substantially the same shape as the first real object 211 and the second real object 212 included in the first mode scene 210. The first change object 221 and the second deforming object 222 may have a color or surface that is the same as or matches a background style of the second mode scene 230.

For another example, in the emergency state, the intermediate screen transfer unit 250 may generate the intermediate scene 220 through simple alpha blending without using the generative AI.

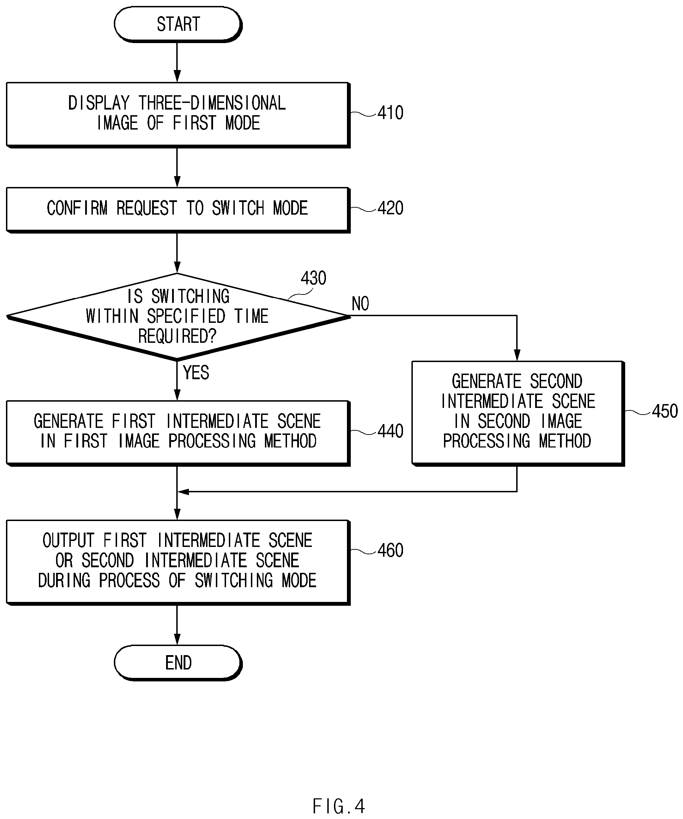

FIG. 4 is a flowchart illustrating a method of displaying a three-dimensional image according to one embodiment.

In the following embodiment, each operation may be sequentially performed, but is not necessarily sequentially performed. For example, the order of the operations may be changed, and at least two operations may be performed in parallel.

Referring to FIG. 4, in operation 410, according to one embodiment, the processor 120 may display a three-dimensional image of a first mode. For example, the first mode may be an augmented reality (AR) mode. The processor 120 may capture images in real time through the camera 180 and display the captured images on the display 160 (video see through (VST)).

In operation 420, according to one embodiment, the processor 120 may confirm a request to switch from the first mode to a second mode. For example, the request may occur when a user selects a display object (e.g., an icon) of an application in the second mode. For another example, the request may occur when the electronic device 101 or the user moves and enters a specific area, or when the user generates a specified gesture input related to the second mode.

According to one embodiment, when the request occurs, the processor 120 may perform loading of a second mode program in a background state. For example, the processor 120 may perform loading of a VR application program in the background state.

In operation 430, according to one embodiment, the processor 120 may check whether the switching from the first mode to the second mode is required (or whether the switching is necessary) within a specified time. For example, the processor 120 may determine, as a non-emergency state, a case in which loading the second mode requires a significant time (e.g., about one minute). For another example, the processor 120 may determine, as an emergency state, a case in which the user enters a specified area and immediate (e.g., within about 10 seconds) transfer to a second mode is required.

In operation 440, according to one embodiment, when the switching within the specified time is required (YES in operation 430), the processor 120 may generate a first intermediate scene by processing a last frame of the first mode scene (or a frame within a certain time from the last frame, the same applies hereinafter) and a start frame of the second mode scene (or a frame within a certain time from the start frame, the same applies hereinafter) according to a first image processing method. For example, the first image processing method may be an alpha blending method.

In operation 450, according to one embodiment, when the switching is required beyond the specified time (NO in operation 430), the processor 120 may generate the second intermediate scene by processing the last frame of the first mode scene and the start frame of the second mode scene according to a second image processing method. For example, the second image processing method may be a method that uses the generative AI.

In operation 460, according to one embodiment, the processor 120 may output a first intermediate scene or a second intermediate scene in the process of switching from the first mode to the second mode. When the loading of the second mode is completed, the processor 120 may end the output of the first intermediate scene or the second intermediate scene and perform switching to the second mode.

FIG. 5 illustrates generation of a real object and virtual object based intermediate scene according to one embodiment.

Referring to FIG. 5, the processor 120 may display a three-dimensional image of a first mode. For example, the first mode may be an augmented reality (AR) mode. In the first mode, the processor 120 may virtually display additional information (e.g., object name, object description) to real objects 211 and 212.

The processor 120 may capture images in real time through the camera 180 and display the captured images on the display 160 (video see through (VST)). For example, a first mode scene 210 may include a first real object 211 and a second real object 212.

In the first mode, the processor 120 may display a display object (e.g., an icon) 215 related to execution of the second mode. The second mode may be a virtual reality (VR) mode. When the display object (e.g., the icon) 215 is selected by the user, the processor 120 may generate and display an intermediate scene 220 corresponding to the first mode and the second mode.

A VR entity 251 may store a library regarding a start screen (start frame) of a second application (VR program) of the second mode that is being executed. The library regarding the second mode may be stored in advance by a creator of the second application (VR program). The processor 120 may store the library regarding the second mode in advance after generation through a generative AI (or a generative AI module) 252 when there is a history of the second application (VR program) being previously executed.

The processor 120 may analyze the first mode scene 210 to obtain information (a position, a size, or a property) about an object included in the first mode scene 210 (VST environment). For example, the processor 120 may obtain information about the positions, the sizes, or the properties of the first real object 211 and the second real object 212.

The processor 120 may input i) information about an object included in the first mode scene 210 and ii) information (style characteristics) about the start screen of the second mode obtained from the VR entity 251 into the generative AI 252. The generative AI 252 may generate the intermediate scene 220.

The generative AI 252 may include an AI model with a simple structure, and may quickly generate the intermediate scene 220 in the process of mode switching. According to one embodiment, the generative AI 252 may generate the intermediate scene 220 in real time based on input information without intervention from an external server.

The intermediate scene 220 may include a first change object 221 based on the first real object 211 and a second deforming object 222 based on the second real object 212. The first change object 221 and the second deforming object 222 may each be in the form of a combination of an object property of the first mode and a background property of the second mode. The first change object 221 and the second deforming object 222 may have substantially the same shape as the first real object 211 and the second real object 212 included in the first mode scene 210. The first change object 221 and the second deforming object 222 may have a color or surface that is the same as or matches a background style of the second mode scene 230.

The intermediate scene 220 may additionally include a first virtual object 225 and a second virtual object 226. When the VR program is loaded, the first virtual object 225 and the second virtual object 226 may be objects that are disposed substantially identically in the start frame of the second mode. The first virtual object 225 and the second virtual object 226 may be changed and disposed or projected onto the real object through the generative AI 252 to match the real object displayed in the first mode.

The intermediate scene 220 may be displayed while the second mode application (VR application) (e.g., Beat Saber) is loading in the background. The output of the intermediate scene 220 may be ended when the loading of the application of the second mode is completed, and the intermediate scene 220 may be naturally transferred to the start screen of the second mode.

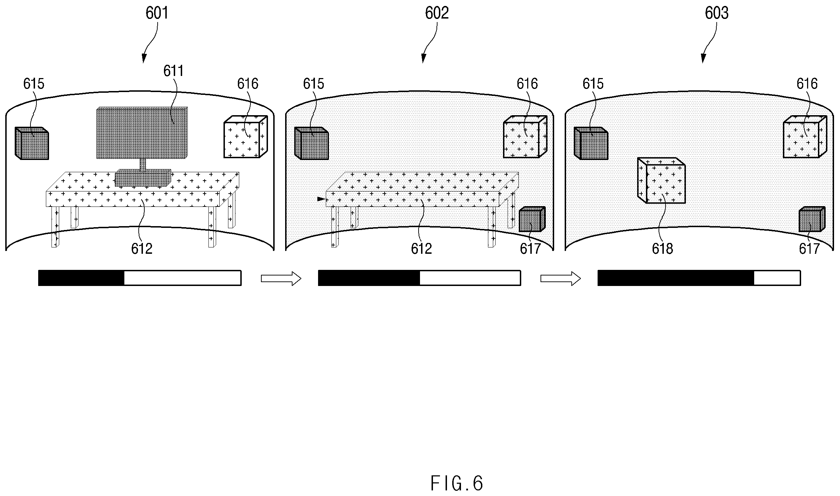

FIG. 6 shows changes in an intermediate scene according to a loading progress of a second mode according to one embodiment. FIG. 6 is exemplary and is not limited thereto.

Referring to FIG. 6, an intermediate scene may be constituted by a plurality of frames. The processor 120 may generate and output intermediate images 601 to 603 that change sequentially with time.

A first frame 601 of the intermediate scene may be an image displayed in a first loading state (e.g., about 30%) of the second mode. The first frame 601 may include a first change object 611 based on a first real object and a second deforming object 612 based on a second real object. The first change object 611 and the second deforming object 612 may each be in the form of a combination of an object property of a first mode and a background property of the second mode. The first change object 611 and the second deforming object 612 may have substantially the same shape as the real object, and may have a color or surface that is the same as or matches a background style of the second mode. The first frame 601 may include a first virtual object 615 and a second virtual object 616. The first virtual object 615 and the second virtual object 616 may be objects that are identically disposed on a start screen of the second mode when a VR program is loaded.

A second frame 602 of the intermediate scene may be an image displayed in a second loading state (e.g., about 60%) of the second mode. The second frame 602 of the intermediate scene may have the first change object 611 based on the first real object removed and the second deforming object 612 based on the second real object maintained. The second frame 602 may maintain the first virtual object 615 and the second virtual object 616. The second frame 602 may additionally include a third virtual object 617. The first virtual object 615, the second virtual object 616, and the third virtual object 617 may be objects that are substantially identically disposed on the start screen of the second mode when the VR program is loaded.

A third frame 603 of the intermediate scene may be an image displayed in a third loading state (e.g., about 90%) of the second mode. The third frame 603 of the intermediate scene may have the first change object 611 based on the first real object and the second deforming object 612 based on the second real object removed. The third frame 603 may maintain the first virtual object 615, the second virtual object 616, and the third virtual object 617. The third frame 603 may additionally include a fourth virtual object 618. The first virtual object 615, the second virtual object 616, the third virtual object 617, and the fourth virtual object 618 may be objects that are disposed substantially identically on the start screen of the second mode when the VR program is loaded.

According to one embodiment, the number of virtual objects disposed may be increased and the number of real objects may be decreased depending on the degree to which the second mode application (VR application) is loaded, and when the loading is completed, the screen may be switched to a VR screen.

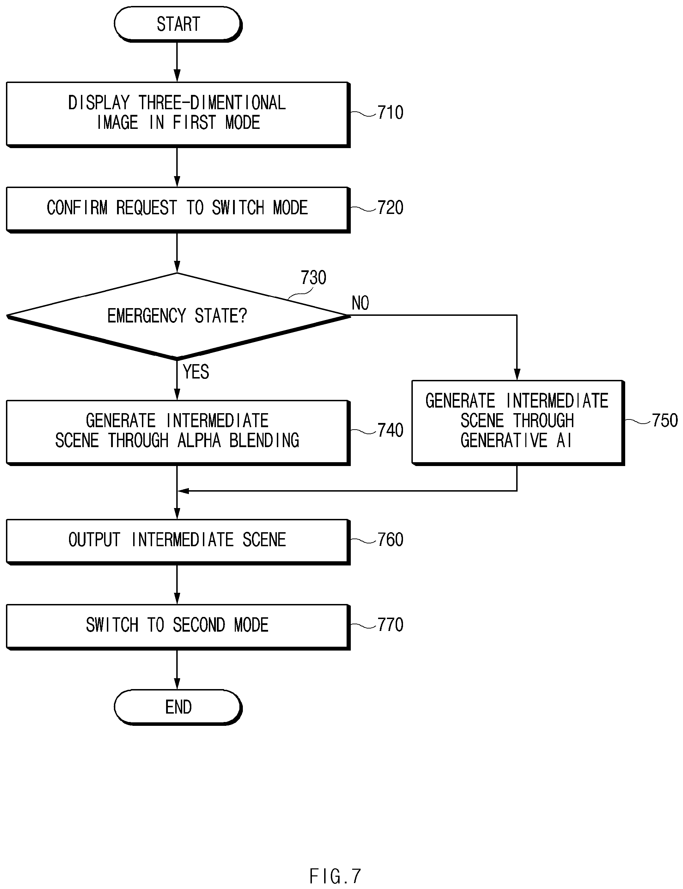

FIG. 7 is a flowchart showing a method of displaying a three-dimensional image in an animated manner according to one embodiment.

In the following embodiment, each operation may be sequentially performed, but is not necessarily sequentially performed. For example, the order of the operations may be changed, and at least two operations may be performed in parallel.

Referring to FIG. 7, in operation 710, according to one embodiment, the processor 120 may display a three-dimensional image of a first mode. For example, the first mode may be an augmented reality (AR) mode. The processor 120 may capture images in real time through the camera 180 and display the captured images on the display 160 (video see through (VST)).

In operation 720, according to one embodiment, the processor 120 may confirm a request to switch from the first mode to a second mode.

For example, the request may be an occurrence of an input with which the user selects a display object (e.g., an icon) of an application in the second mode. The request may occur when the user generates a specified gesture input related to the second mode. For another example, the request may occur when the electronic device 101 or the user moves and enters a specific area.

In operation 730, according to one embodiment, the processor 120 may determine whether the request is in an emergency state requiring a mode switching within a specified time.

For example, when the user enters a specified area and immediate switching to the second mode is required (e.g., within about 10 seconds), the request may be determined as a first property (the emergency state). For another example, when the loading time of the second mode (e.g., about one minute) is required and switching from the first mode to the second mode within the specified time is impossible, or when an illumination difference between the first mode and the second mode exceeds a specified value and it is necessary to prevent or reduce glare to the user, the request may be determined as a second property (a non-emergency state).

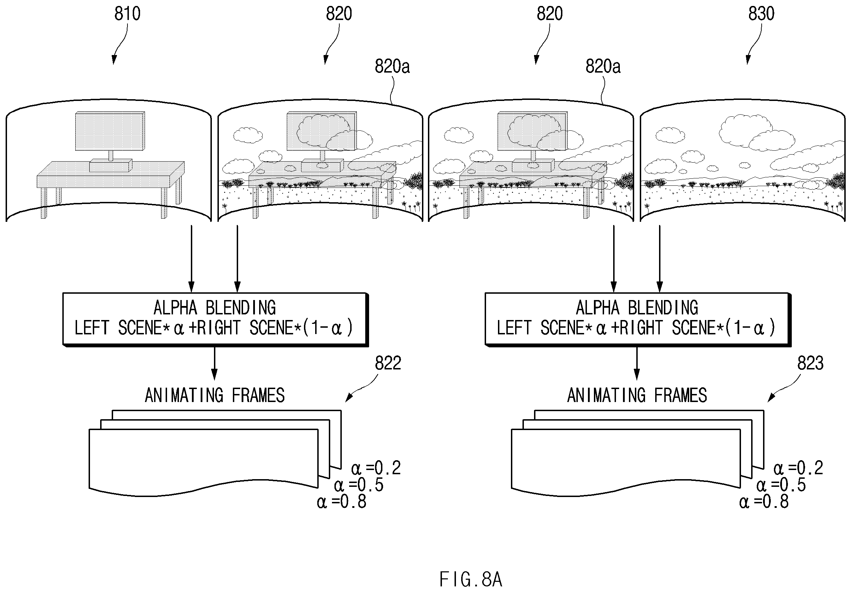

In operation 740, according to one embodiment, when the determination is made as the emergency state (YES in operation 730), the processor 120 may generate an intermediate scene in an animated manner by performing alpha blending on the last frame of the first mode (or a frame within a certain time from the last frame) and the start frame of the second mode (or a frame within a certain time from the start frame). The alpha blending may be a method of transferring transparency between two images (see FIG. 8a).

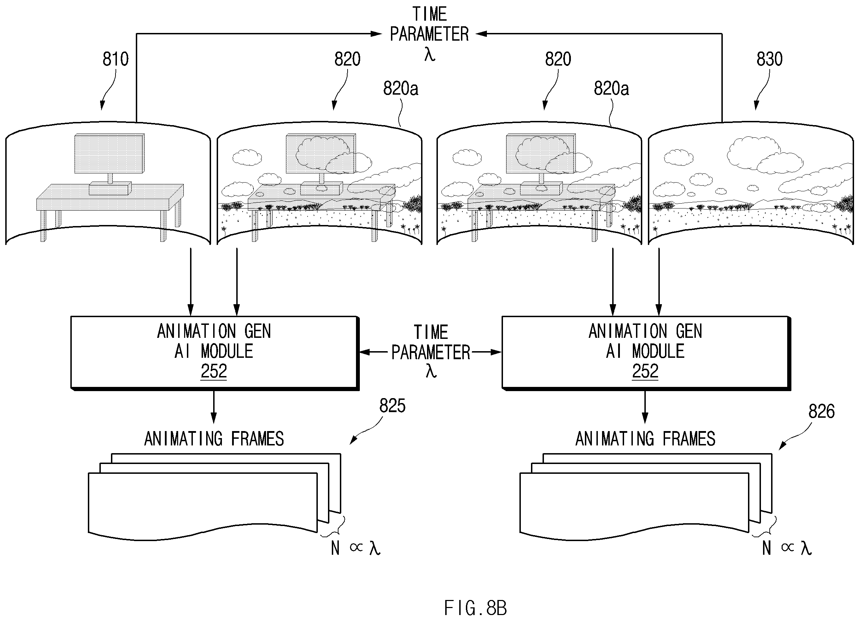

In operation 750, according to one embodiment, when the determination is made as the non-emergency state (NO in operation 730), the processor 120 may input the last frame of the first mode and the start frame of the second mode to an animation-generative AI. When the determination is made as the non-emergency state, the processor 120 sets am animation playback time (number of frames) using a time parameter that reflects the difference in illumination or a content loading delay (see FIG. 8b).

In operation 760, according to one embodiment, the processor 120 may output the intermediate scene in the process of switching from the first mode to the second mode.

In operation 770, according to one embodiment, when loading of the second mode is completed, the processor 120 may perform switching to the second mode.

FIG. 8a shows generation of an intermediate scene by an alpha blending technique according to one embodiment.

Referring to FIG. 8a, the processor 120 may generate and output an intermediate scene 820 in the process of transferring from a first mode scene 810 to a second mode scene 830. When there is not enough time to generate the intermediate scene 820 using the generative AI, the processor 120 may quickly generate and display the intermediate scene 820 having a fixed number of frames using the alpha blending technique.

For example, the processor 120 may generate an intermediate frame 820a by simply combining the last frame of the first mode scene 810 and the start frame of the second mode scene 830.

The processor 120 may generate first animating frames 822 using the first mode scene 810 and an intermediate frame 820a using the alpha blending technique. The first animating frames 822 may be generated so that the transparency for the last frame of the first mode scene 810 sequentially increases with time and the transparency for the intermediate frame 820a sequentially decreases with time.

The processor 120 may generate second animating frames 823 using the alpha blending technique using the intermediate frame 820a and the second mode scene 830. The second animating frames 823 may be generated so that the transparency for the intermediate frame 820a sequentially increases with time, and the transparency for the start frame of the second mode scene 830 sequentially decreases with time.

In the process of switching from the first mode to the second mode, the processor 120 may generate and output the intermediate scene by combining the first animating frames 822 and the second animating frames 823.

FIG. 8b illustrates generation of an intermediate scene using generative AI according to one embodiment.

Referring to FIG. 8b, the processor 120 may generate and output an intermediate scene 820 in the process of transferring from a first mode scene 810 to a second mode scene 830. When a time needed to generate an intermediate scene 820 using a generative AI 252 is secured, the processor 120 may generate and display the intermediate scene 820 in the form of an animation using the generative AI 252. For example, if it takes about three minutes to load an application of the second mode, the processor 120 may generate the intermediate scene 820 in the form of an animation using the generative AI 252 and display the intermediate scene 820 for about 3 minutes.

For example, the processor 120 may generate an intermediate frame 820a by simply combining the last frame of the first mode scene 810 and the start frame of the second mode scene 830.

The processor 120 may input an end frame and an intermediate frame 820a of the first mode scene 810 into the generative AI 252 to generate first animating frames 825. The processor 120 may input a time parameter λ together into the generative AI 252. The time parameter λ may be determined based on a difference in illumination between the first mode and the second mode, a difference in spatial structure, and/or a delay time of program loading.

A start frame of the first animating frames 825 may be an end frame of the first mode scene 810, and an end frame of the first animating frames 825 may be the intermediate frame 820a. The first animating frames 825 may be configured in such a way that the characteristics of the first mode decrease with time and the characteristics of the intermediate frame 820a increase with time, rather than simply changing transparency. The number of frames N constituting the first animating frames 825 may be determined in proportion to the time parameter λ.

The processor 120 may input the intermediate frame 820a and the start frame of the second mode scene 830 into the generative AI 252 to generate second animating frames 826. The processor 120 may input the time parameter λ together into the generative AI 252. The time parameter λ may be determined based on a difference in illumination between the first mode and the second mode, a difference in spatial structure, and/or a delay time of program loading.

A start frame of the second animating frames 826 may be the intermediate frame 820a, and an end frame of the second animating frames 826 may be the start frame of the second mode scene 830. The second animating frames 826 may be configured in such a way that the characteristics of the intermediate frame 820a decrease with time and the characteristics of the second mode scene 830 increase with time, rather than simply changing the transparency. The number of frames N constituting the second animating frames 826 may be determined in proportion to the time parameter λ.

The processor 120 may combine the first animating frames 825 and the second animating frames 826 to generate and output the intermediate scene.

According to one embodiment, the generative AI 252 may receive the time parameter λ. The time parameter λ may be determined based on at least one of a difference in illumination between the first mode and the second mode, a difference in spatial structure, and a delay time of program loading. For example, in the case of the difference in illuminance, the processor 120 may compare average Y values when viewing the scene in YUV color expression format and determine that the greater the difference, the greater the difference in illuminance. For another example, in the case of the difference in spatial structure difference, the processor 120 may determine that the structure is larger as matching points are fewer by applying a feature matching algorithm.

According to one embodiment, the generative AI 252 may generate the intermediate scene 820 including many frames so that as the difference in illuminance or the difference in spatial structure between the first mode and the second mode is greater, the screen transfer may be performed for a more sufficient time to avoid discomfort to the user from the sudden change in field of view.

The generative AI 252 may generate the intermediate scene 820 by setting the number of frames to, when a loading delay occurs in the second mode, provide a transfer experience as much as a time corresponding to the delay.

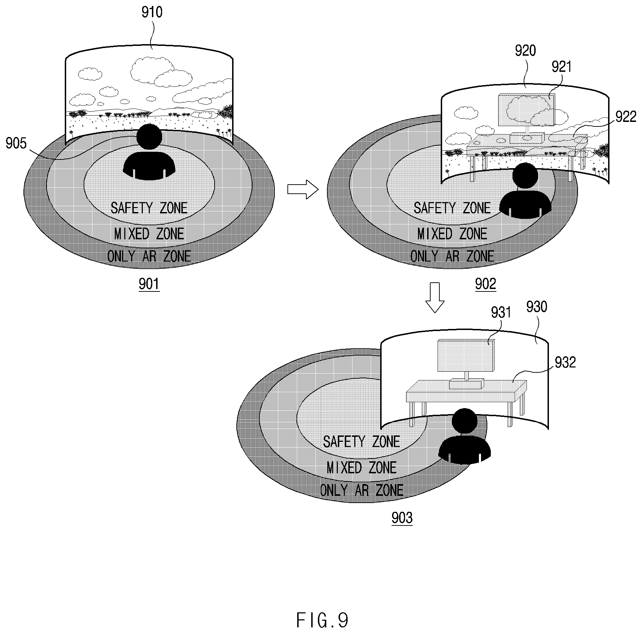

FIG. 9 illustrates display of an intermediate scene according to a position of a user according to one embodiment.

Referring to FIG. 9, the processor 120 may divide the surroundings of a user 905 into a plurality of areas (or multiple zones) and perform output in different ways according to each area. The processor 120 may determine a zone to which the user 905 belongs through a sensor or camera. For example, the processor 120 may divide the surroundings into a first zone (safety zone) that may be driven in a VR mode, a second zone (mixed zone) that is output as an intermediate scene, and a third zone (only AR zone) that is driven in an AR mode.

The first zone (safety zone) may be an area where the user may use VR without any or little risk factors by understanding a surrounding environment in advance. The second zone (mixed zone) may be an area where the user needs to be aware of his or her surroundings when using VR. The third zone (only AR zone) may be an area where the user needs to check the surrounding situations due to obstacles, which may require exiting the VR mode.

For example, in the case of a first state 901 where the user 905 is in the first zone (safety zone), the processor 120 may display a VR mode scene 910. In the case of a second state 902 where the user 905 moves from the first zone (safety zone) to the second zone (mixed zone), the processor 120 may determines that the state is an emergency state and display an intermediate scene 920 by the alpha blending method. The intermediate scene 920 may include a first change object 921 and a second deforming object 922. The first change object 921 may have a shape substantially identical to a first real object 931, and the second deforming object 922 may have a shape substantially identical to a second real object 932. The first change object 921 and the second deforming object 922 may have a color or surface that is the same as or matches a background style of the VR mode scene 910.

When the user 905 stays in the second zone (mixed zone), the processor 120 may continuously display the intermediate scene 920. In the case of the third state 903 where the user 905 moves from the second zone (mixed zone) to the third zone (only AR zone), the processor 120 may determine that the state is an emergency state and display the AR mode scene 930 by the alpha blending method. The AR mode scene 930 may include the first real object 931 and the second real object 932. The user 905 may check a surrounding situation, such as obstacles, in the third zone (only AR zone).

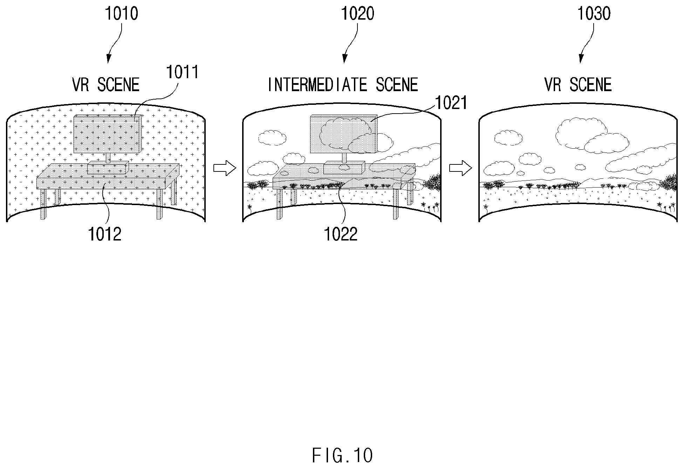

FIG. 10 illustrates switching from a first VR mode to a second VR mode according to one embodiment.

Referring to FIG. 10, the processor 120 may generate and output an intermediate scene 1020 in the process of changing from a first mode scene 1010 to a second mode scene 1030. For example, the first mode scene 1010 may be a scene output by execution of a first VR application (program). The second mode scene 1030 may be a scene output by execution of a second VR application (program). For example, the processor 120 may be outputting the first mode scene 1010 including a first virtual object 1011 and a second virtual object 1012.

While outputting the first mode scene 1010, the processor 120 may confirm a request to switch from the first mode to the second mode. For example, the request may occur when a user selects a display object (e.g., an icon) of the second VR application.

When loading of the second VR application requires time, the processor 120 may load the second VR application (program) in the background and generate and output the intermediate scene 1020 using the generative AI. The intermediate scene 1020 may include virtual objects 1021 and 1022 having substantially the same shape as the first virtual object 1011 and the second virtual object 1012 included in the first mode scene 1010. In the intermediate scene 1020, a third virtual object 1021 and a fourth virtual object 1022 may have colors or surfaces that are the same as or match a background style of the second mode scene 1030.

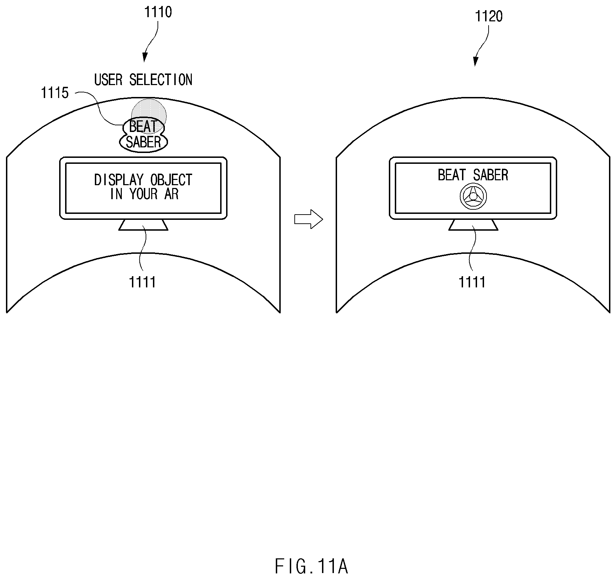

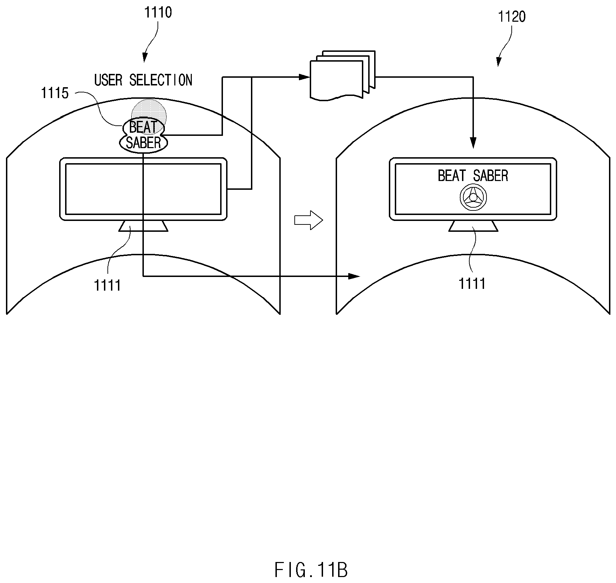

FIGS. 11a and 11b illustrate generation of an intermediate scene using a real object according to one embodiment. FIGS. 11a and 11b are exemplary and not limited thereto.

Referring to FIGS. 11a and 11b, the processor 120 may display a three-dimensional image of a first mode. For example, the first mode may be an augmented reality (AR) mode. In the first mode, the processor 120 may virtually display additional information (e.g., an object name and object description) to a real object 1111. For example, a first mode scene 1110 may include the real object 1111.

The processor 120 may display a display object (e.g., an icon) 1115 related to execution of a second mode. The second mode may be a virtual reality (VR) mode. When the display object (e.g., the icon) 1115 is selected by a user, the processor 120 may generate and display an intermediate scene 1120 corresponding to the first mode and the second mode.

The processor 120 may analyze the first mode scene 1110 to obtain information (a position, a size, or a property) about an object included in the first mode scene 1110. For example, the processor 120 may obtain information about the position, the size, or the property of the real object 1111. When the property of the real object 1111 is a display property, a display area of the real object 1111 may be detected, and the intermediate scene 1120 that reflects (maps and renders) a start screen of the second mode on the display area of the real object 1111 may be generated. The processor 120 may generate the intermediate scene 1120 using the generative AI 252.

When loading of the second mode is completed, the processor 120 may complete switching to the second mode by expanding the image of the display area of the real object 1111 or changing an area other than the display area to the second mode scene.

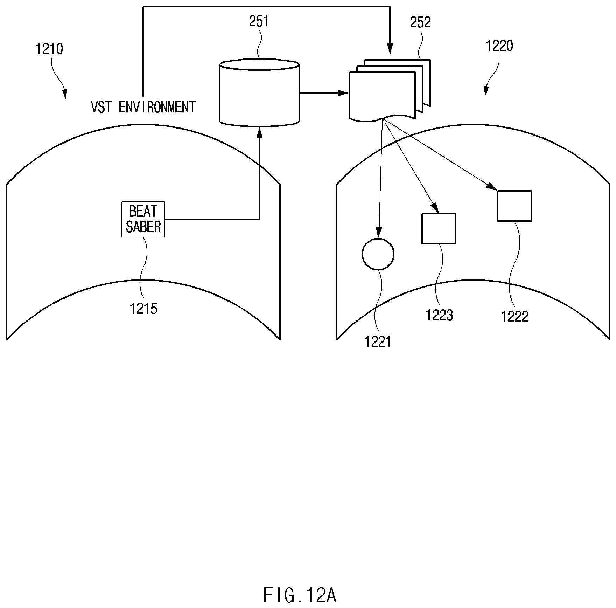

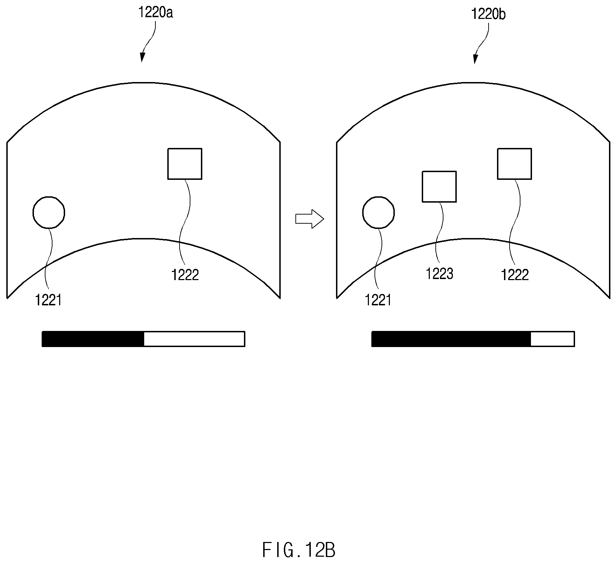

FIGS. 12a and 12b illustrate generation of an intermediate scene using virtual objects according to one embodiment.

Referring to FIGS. 12a and 12b, the processor 120 may display a three-dimensional image of a first mode. For example, the first mode may be an augmented reality (AR) mode. The processor 120 may display a display object (e.g., an icon) 1215 related to execution of a second mode. The second mode may be a virtual reality (VR) mode. When the display object (e.g., the icon) 1215 is selected by a user, the processor 120 may generate and display an intermediate scene 1220 corresponding to the first mode and the second mode.

A VR entity 251 may store a library regarding the start frame of a second application (VR program) of the second mode being executed. The library for the start frame of the second mode may be stored in advance by a creator of the second application (VR program). Alternatively, the processor 120 may store the library regarding the second mode in advance after generation through a generative AI 252 when there is a history of the second application (VR program) being previously executed.

The processor 120 may generate first to third virtual objects 1221 to 1223 in which the style of the second mode is reflected. The processor 120 may generate the intermediate scene 1220 by combining the first to third virtual objects 1221 to 1223 in various ways.

According to one embodiment, the processor 120 may analyze the first mode scene 210 to obtain information (a location, a size, or a property) about an object included in the first mode scene 1210. For example, the processor 120 may cause first to third virtual objects 1221 to 1223 to be harmoniously disposed on various real objects.

In FIG. 12b, the processor 120 may differently display the first to third virtual objects 1121 to 1123 with time. The processor 120 may gradually increase the number of virtual objects loaded from a VR entity 251 or generated through a generative AI 252 depending on the loading level of the second application (VR program).

For example, a first frame 1220a of the intermediate scene 1220 may be an image displayed in a first loading state (e.g., about 50%). The first frame 1220a may include the first virtual object 1221 and the second virtual object 1222.

A second frame 1220b of the intermediate scene 1220 may be an image displayed in a second loading state (e.g., about 80%). The first frame 1220a may include the first virtual object 1221, the second virtual object 1222, and the third virtual object 1223.

According to one embodiment, the processor 120 may dispose the first virtual object 1221, the second virtual object 1222, or the third virtual object 1223 to match the surrounding environment. The processor 120 may analyze the first mode scene 1210 to obtain information (a position, a size, or a property) about a real object included in the first mode scene 1210. The processor 120 may change the position, size, and shape of the first to third virtual objects 1121 to 1123 so that the objects are disposed to match various real objects.

When an electronic device switches between 3D modes, the electronic device may display a loading screen or provide simple effects. In this case, the loading screen or simple effects may cause boredom to a user. Alternatively, when the mode is immediately switched, the immediate switching may cause discomfort to the user due to a sudden change in environment, a change in illumination, or a change in spatial sense.

An electronic device according to one embodiment may include a display, a memory, and at least one processor. The memory may store instructions that, when executed by the at least one processor, cause the electronic device to display a three-dimensional (3D) image in a first mode, confirm a request to switch from the first mode to a second mode, determine whether the switching is possible within a specified time, generate a first intermediate image by processing a first image of the first mode and a second image of the second mode according to a first image processing method when the switching is possible within the specified time, generate a second intermediate image by processing the first image of the first mode and the second image of the second mode according to a second image processing method when the switching is possible beyond the specified time, and output the first intermediate image or the second intermediate image in a process of switching from the first mode to the second mode.

In one embodiment, the instructions, when executed by the at least one processor, may cause the electronic device to generate the first intermediate image or the second intermediate image using a first object displayed in the first mode or a second object displayed in the second mode.

In one embodiment, the instructions, when executed by the at least one processor, may cause the electronic device to generate the second intermediate image using a generative AI.

In one embodiment, the instructions, when executed by the at least one processor, may cause the electronic device to input a time parameter to the generative AI to generate the second intermediate image.

In one embodiment, the instructions, when executed by the at least one processor, may cause the electronic device to determine the time parameter based on at least one of an illuminance difference between the first image and the second image, a structural difference between the first mode and the second mode, and a loading time of the second mode.

In one embodiment, the instructions, when executed by the at least one processor, may cause the electronic device to generate the second intermediate image constituted by a number of frames proportional to the time parameter.

In one embodiment, the instructions, when executed by the at least one processor, may cause the electronic device to generate the first intermediate image by an alpha blending method.

In one embodiment, the instructions, when executed by the at least one processor, may cause the electronic device to generate one frame of the first intermediate image, perform first alpha blending of a last frame of the first image and the one frame, perform second alpha blending of the one frame and a start frame of the second image, and generate the first intermediate image by the first and second alpha blending.

In one embodiment, the instructions, when executed by the at least one processor, may cause the electronic device to generate and output the first intermediate image or the second intermediate image having a plurality of frames that change with time.

In one embodiment, the instructions, when executed by the at least one processor, may cause the electronic device to store information about an entity constituting a start frame of the second image in the memory.

In one embodiment, the first mode may be an AR mode and the second mode may be a VR mode.

In one embodiment, the instructions, when executed by the at least one processor, may cause the electronic device to recognize a real object included in the first image and display an object that has the same shape as the real object and in which style of the second mode is reflected, in the second intermediate image.

In one embodiment, the instructions, when executed by the at least one processor, may cause the electronic device to detect a display area of the real object, and reflect the style of the second mode in the display area.

In one embodiment, the first mode may be a first VR mode, and the second mode may be a second VR mode.

In one embodiment, the first mode may be a VR mode and the second mode may be an AR mode.

According to one embodiment, the electronic device may further include a sensor and a camera. The instructions, when executed by the at least one processor, may cause the electronic device to divide an area around the electronic device into a plurality of zones, detect whether the electronic device enters a designated zone using the sensor and the camera, and generate and output the first intermediate image when the electronic device enters the designated zone.

An electronic device according to one embodiment may include a display, a memory, and at least one processor. The memory may store instructions that, when executed by the at least one processor, cause the electronic device to display a 3D image in a first mode on the display, confirm a request to switch from the first mode to a second mode; generate at least one virtual object related to the second mode, and add and output the at least one virtual object to a first image in the first mode in a process of the switching from the first mode to the second mode.

In one embodiment, the instructions, when executed by the at least one processor, may cause the electronic device to add the at least one virtual object to the first image by reflecting an arrangement form of a real object displayed in the first mode.

According to one embodiment, the at least one virtual object may be plural in number. The instructions, when executed by the at least one processor, may cause the electronic device to increase the number of the at least one virtual object added to the first image according to a loading progress state of an application of the second mode.

A method of displaying a three-dimensional image according to one embodiment may be performed in an electronic device. The method may include displaying a 3D image in a first mode, confirming a request to switch from the first mode to a second mode, determining whether the switching is possible within a specified time, generating a first intermediate image by processing a first image of the first mode and a second image of the second mode according to a first image processing method when the switching is possible within the specified time, generating a second intermediate image by processing the first image of the first mode and the second image of the second mode according to a second image processing method when the switching is possible beyond the specified time, and outputting the first intermediate image or the second intermediate image in a process of switching from the first mode to the second mode.

An electronic device according to one embodiment disclosed herein may generate and output an intermediate image when switching between 3D modes. The intermediate image may have both characteristics of the 3D mode before switching and characteristics of the 3D mode after switching. In this way, it is possible to provide a user with a stable sense of immersion without a sudden change in environment, a change in illumination, or a change in spatial sense.

An electronic device according to one embodiment disclosed herein may provide an intermediate image that may naturally handle a delay situation occurring in program loading when switching between 3D modes.

An electronic device according to one embodiment disclosed herein may distinguish between an emergency switching state and a non-emergency switching state, and generate and provide an intermediate image according to each situation in real time. In the non-emergency switching state, a generative AI may be used.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
memory; and
at least one processor, comprising processing circuitry, operatively connected to the display and the memory,
wherein the memory stores instructions and at least one processor, individually and/or collectively, is configured to execute the instructions and to cause the electronic device to:
display a three-dimensional (3D) image in a first mode on the display;
confirm a request to switch from the first mode to a second mode;
determine whether the switching is possible within a specified time;
generate a first intermediate image by processing a first image of the first mode and a second image of the second mode according to a first image processing method based on the switching being possible within the specified time;
generate a second intermediate image by processing the first image of the first mode and the second image of the second mode according to a second image processing method based on the switching being possible beyond the specified time; and
output the first intermediate image or the second intermediate image in a process of switching from the first mode to the second mode.

2. The electronic device of claim 1, wherein at least one processor, individually and/or collectively, is configured to cause the electronic device to generate the first intermediate image or the second intermediate image using a first object displayed in the first mode or a second object displayed in the second mode.

3. The electronic device of claim 1, wherein at least one processor, individually and/or collectively, is configured to cause the electronic device to generate the second intermediate image using a generative AI.

4. The electronic device of claim 3, wherein at least one processor, individually and/or collectively, is configured to cause the electronic device to input a time parameter to the generative AI to generate the second intermediate image.

5. The electronic device of claim 3, wherein at least one processor, individually and/or collectively, is configured to cause the electronic device to: determine the time parameter based on at least one of an illuminance difference between the first image and the second image, a structural difference between the first mode and the second mode, and a loading time of the second mode.

6. The electronic device of claim 3, wherein at least one processor, individually and/or collectively, is configured to cause the electronic device to generate the second intermediate image including a number of frames proportional to the time parameter.

7. The electronic device of claim 1, wherein at least one processor, individually and/or collectively, is configured to cause the electronic device to generate the first intermediate image by an alpha blending method.

8. The electronic device of claim 7, wherein at least one processor, individually and/or collectively, is configured to cause the electronic device to:
generate one frame of the first intermediate image;
perform first alpha blending of a last frame of the first image and the one frame;
perform second alpha blending of the one frame and a start frame of the second image; and
generate the first intermediate image by the first and second alpha blending.

9. The electronic device of claim 1, wherein at least one processor, individually and/or collectively, is configured to cause the electronic device to generate and output the first intermediate image or the second intermediate image having a plurality of frames that change with time.

10. The electronic device of claim 1, wherein at least one processor, individually and/or collectively, is configured to cause the electronic device to store information about an entity including a start frame of the second image in the memory.

11. The electronic device of claim 1, wherein at least one processor, individually and/or collectively, is configured to cause the electronic device to:
recognize a real object included in the first image; and
display an object that has the same shape as the real object and in which style of the second mode is reflected, in the second intermediate image.

12. The electronic device of claim 11, wherein at least one processor, individually and/or collectively, is configured to cause the electronic device to:
detect a display area of the real object; and
reflect the style of the second mode in the display area.

13. The electronic device of claim 1, further comprising a sensor and a camera,
wherein at least one processor, individually and/or collectively, is configured to cause the electronic device to:
divide an area around the electronic device into a plurality of zones;
detect whether the electronic device enters a designated zone using the sensor and/or the camera; and
generate and output the first intermediate image based on the electronic device entering the designated zone.

14. An electronic device comprising:
a display;
a memory; and
at least one processor, comprising processing circuitry, operatively connected to the display and the memory,
wherein the memory stores instructions and at least one processor, individually and/or collectively, is configured to execute the instructions and to cause the electronic device to:
display a three-dimensional (3D) image in a first mode on the display;
confirm a request to switch from the first mode to a second mode;
generate at least one virtual object related to the second mode; and
add and output the at least one virtual object to a first image in the first mode in a process of the switching from the first mode to the second mode.

15. A method of displaying a three-dimensional image that is performed on an electronic device, the method comprising:
displaying a three-dimensional (3D) image in a first mode;
confirming a request to switch from the first mode to a second mode, determining whether the switching is possible within a specified time;
generating a first intermediate image by processing a first image of the first mode and a second image of the second mode according to a first image processing method based on the switching being possible within the specified time;
generating a second intermediate image by processing the first image of the first mode and the second image of the second mode according to a second image processing method based on the switching being possible beyond the specified time; and
outputting the first intermediate image or the second intermediate image in a process of switching from the first mode to the second mode.
